# EUROPEAN PATENT APPLICATION

(11) **EP 2 463 772 A1**
(43) Date of publication of application: **13.06.2012**
(21) Application number: 10192963.6
(22) Date of filing: 29.11.2010
(51) Int. Cl.: G06F 9/44, G06F 9/445, G06F 3/01

(54) **Method for dynamically allocating an external peripheral to device application**

(71) Applicant: NEC CASIO Mobile Communications, Ltd., Kawasaki Kanagawa 211-8566 (JP)
(72) Inventor: Fok, Frederic, 92100, BOULOGNE BILLANCOURT (FR); Renard, Cyril, 78290, CROISSY SUR SEINE (FR); Beaugrand, Fabrice, 92500, RUEIL MALMAISON (FR)
(74) Representative: Ilgart, Jean-Christophe

(57) **Abstract**

The invention concerns a method for dynamically managing allocation of HIDs (Human Interface Devices) to a Graphical Environment, said method consisting of changing dynamically the association of HIDs to the graphical environment.

## Description

### TECHNICAL DOMAIN

The invention pertains to telecommunication field and concerns a method for dynamically allocating at least a first HID (Human Interface Device) among a plurality of HIDs to a first Graphical Environment among a plurality Graphical Environments for using an application on a communication device.

The invention also concerns a system for implementing said method.

The invention also concerns a communication device using an application running under a first Graphical Environment, said communication device comprising at least a first HID allocated to the first Graphical Environment.

The invention also concerns a computer program stored on a recording medium and comprising instruction for performing, when executed in a computer system, the steps of the method according to the invention.

### STATE OF PRIOR ART

Mobile Communication device introduces the concept of two or more applications that can have the focus at the same time and potentially using several HIDs and/or external keyboards and screens simultaneously. There is a need of a solution to manage dynamically allocation of the right Human Interface Devices (HIDs), keyboards and screens simultaneously to the applications that currently have the focus.

Although operating systems like Windows or Linux OS are considered multi-tasks, at a given instant, only one application is active at the User Interface and only this application has the focus and receives events from HIDs (keyboard, mouse ... ) . Even if the user connects multiple keyboards, all events are received by the application that has focus. The other application (s) run (s) in the background, i.e. they use the CPU for processing a video encoding, or for displaying content without allowing interaction with the user. The windows OS and Linux offer extended desktop feature that allows adding one or more screens that merely extend the office in order to have more area for displaying one or more applications. The interaction with the user does not change.

In client-server architecture, the most common type of modern thin client is a low-end, computer terminal which concentrates solely on providing a graphical user interface to the end-user. The remaining functionality, in particular the operating system, is provided by the server.

A technical problem comes from the fact that during a client-server session, a user is not able to switch an HID connected to a thin client from a first Graphical Environment to a second Graphical Environment.

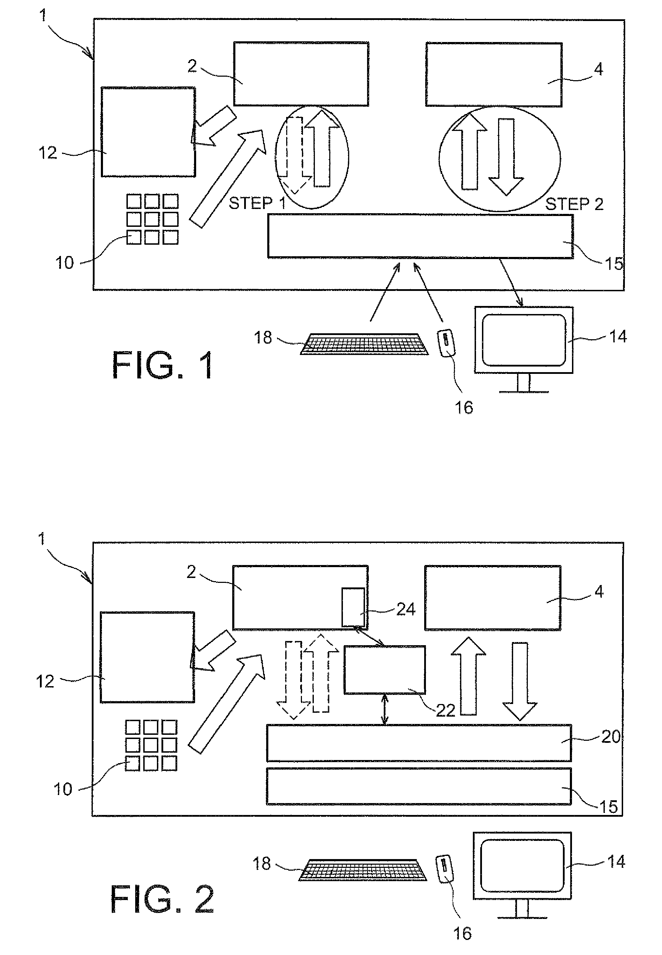

Figure 1 schematically illustrates a thin-client equipment 1 used for controlling an application running under a first Graphical Environment 2 and a second Graphical Environment 4.

The thin-client equipment 1 comprises internal HIDs (Human Interface Devices) such as an internal keyboard 10 and a driver module 15 for controlling each external HIDs (16, 18) that may be connected to said thin-client equipment.

In the example of figure 1, it is assumed that only the first Graphical Environment 2 is active and a user of the thin client equipment uses an application running under the first Graphical Environment 2. If the user connects to the thin client equipment external HIDs such as an external mouse 16, or an external keyboard 18, said external HIDs are detected by the drivers 15 of the thin client equipment and associated to the unique active Graphical Environment 2. If the second Graphical Environment 4 is launched on the thin-client equipment, and if the second Graphical Environment 4 prempts HIDs, the User is not able to dynamically switch the preempted HIDs from the second Graphical Environment 4 to the first Graphical Environment 2.

A first object of the invention is to solve the above problem.

More specifically, the invention aims at dynamically managing allocation of HIDs to the applications that currently have the focus, for example, in a cloud computing session in which two or more applications have the focus at the same time and use HIDs simultaneously.

### PRESENTATION OF THE INVENTION

The object of the invention is achieved by means of a method for dynamically managing association of HIDs (Human Interface Devices) to a Graphical Environment.

The method according to the invention consists of changing dynamically the association of HIDs to the graphical environment.

In a first embodiment of the invention, the HIDs may be routed to the Graphical Environment automatically, according to predefined User preferences, or by an instant selection made by the user.

The method according to the invention is implemented by means of a system for dynamically managing association of HIDs (Human Interface Devices) to a Graphical Environment.

The system according to the invention comprises means for changing dynamically the association of HIDs to the graphical environment.

The method according to the invention is used with a communication device operating under a given Graphical Environment, said communication device comprising at least a first HID allocated to the said Graphical Environment.

The communication device according to the invention comprises detecting means for detecting the connection of a second HID to the communication device, and allocating means for allowing the User to change dynamically the association of peripherals to the graphical environment.

### BRIEF DESCRIPTION OF THE FIGURES

The invention will be better understood from the following description, taken as a non-limiting example, with reference to the attached figures in which:
- figure 1 schematically illustrates a user equipment used for controlling an application running under two different Graphical Environments in the prior art.
- figure 2 schematically illustrates a user equipment used for controlling an application running under two different Graphical Environments according to the invention.
- figure 3 schematically illustrates a dynamic allocation of HIDs to a Window System (WS) according to the invention in an Operating System where HIDs can be associated to a WAS managing one or more applications,
- figure 4 is a flow chart schematically illustrating the interactions between different components of the system of figure 3.

### DESCRIPTION OF A DETAILED ENBODIMENT OF THE INVENTION

The method according to the invention will be described by reference to figure 2 in which a User Equipment (UE) 1 supporting a first Graphical Environment 2 and a second Graphical Environment 4 is configured to communicate with a remote server of a in a Cloud Service Provider (CSP) for remotely using a application running on said server 4 under one of first or second Graphical Environments.

In the following description, identical reference number will designate the elements common to the figures.

It is to be noted that a Graphical Environment may be an application or a group of applications in a Window System (WS), the Path/Routing mechanism should then occur at the Window system level to associate a device to an Application (and not to the active Application with the focus as currently done with existing Window System. The Graphical Environments may also be a Window System in an Operating System (OS), in this case, HIDs can be associated to a WS managing one or more applications. The Graphical Environment should be compliant with a device working on a virtualization layer and supporting two are more Operating Systems.

Referring to Figure 2, compared to the UE 1 of figure 1, the UE 1 of the invention further comprises tree modules consisting of a path manager 20, a routing table 22, and a Peripheral Association Application 24.

The path manager 20 is a software component implementing the service that changes the path of data events from the input devices to the Window Systems.

The Peripheral Association Application is a software component implementing the User Interface for the User to dynamically allocate at least a first HID (Human Interface Device) a among a plurality of HIDs to first Graphical Environment among a plurality Graphical Environments for using an application on a the UE 1.

The Routing Table is a data structure stored in the UE 1 comprising the allocation performed by the Peripheral Association Application.

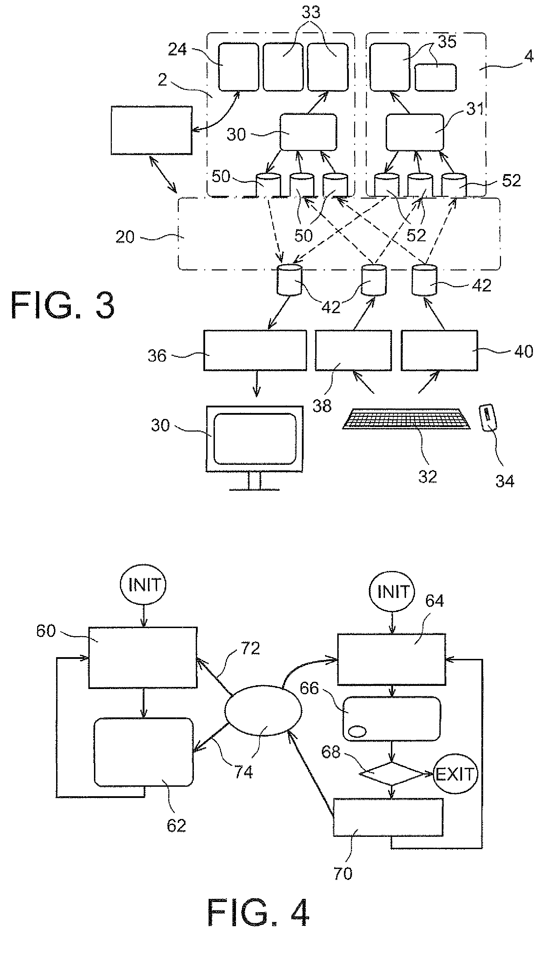

Figure 3 schematically illustrates a system for dynamically allocating a screen 3, and/or a keyboard 32 and/or a mouse 34 to the first Graphical Environment 2 or to the second Graphical Environment 4 for using an application.

In this system, the first Graphical Environment 2 is seen as the Window System 30 of the Operating Systems (OS) where Applications 33 may be executed (i.e. Android^{®} for mobile Applications and Linux® for the PC applications), and the second Graphical Environment 4 is seen as the Window System 31 where an Application 35 may be executed.

In this example, the system comprises a screen driver 36, a keyboard driver 38, and a mouse driver 40. Each device driver communicates with the Path Manager 20 through dedicated File Descriptors 42 representing files of inputs events respectively for/from the keyboard 32 and for the mouse 34 or outputs for the monitor 30

When HIDs (the keyboard 32 and/or the mouse 34) are connected to the UE!, the Path Manager 20 redirects the inputs of each HID in files 50 and 52 managed respectively by the Window Systems (WS) 30 and 31.

With this architecture, if one of the HIDs, the keyboard 32 or the mouse 34 is connected to the UE1, the screen driver 36, and /or the keyboard driver 38, and/or the mouse driver are not directly associated with the Window System 30 or 31 but it is the role of the Path Manager to associate the corresponding files to one of the Window System 30 or 31.

In the following, device GE represents the Graphical environment dedicated to a Device, and Remote GE represents the Graphical environment dedicated to remote connection.

In operation, at boot time, the routing table 22 is set up with a default association. As a default association, a new HID may be associated with the Graphical Environment of the UE1 (default deviceGE).

However this default association can be override by the User preference.

After a mouse and keyboard have been plugged in, the routing table 22 set up two entries:
default deviceGE
/dev/input/event0 deviceGE
/dev/input/event1 deviceGE

Thanks to the Peripheral Association Application 24, the User can decide to associate the two inputs to a remoteApp as follows:
default deviceGE
/dev/input/event0 remoteGE
/dev/input/event1 remoteGE

When a new HID is detected, the Path Manager looks for the default association in the routing table to associate the device to the expected Window System.

When the routing table is updated (via the Peripheral Association Application 24, the Path Manager 20 is informed. The Path Manager 20 then checks based on current association and current routing table value whether the association between the HID and the Window System should be changed or not.

Figure 4 schematically illustrates the steps performed at the Path Manager side and at the Peripheral Association Application side for dynamically allocating an HID to a Graphical Environment.

At the Path Manager side, when a new HID is detected, the path manager 20 connects the virtual driver file descriptor to a Window System based on routing table values (step 60) and wait for new HID connection or routing value change (step 62).

At the Peripheral Association Application 24 side, the Peripheral Association Application displays the current association is at step 64, and wait for the user selection (step 66).

At step 68, the user decide or not to change the current association.

If the user does not change the association, the application on focus is used with the current association.

Else, the routing table value is changed consequently at step 70 and the path manager is informed of the change of the routing table (arrows 72 and 74).

The application on focus is used with the new association.

## Claims

1. A method for dynamically managing allocation of HIDs (Human Interface Devices) (32, 34) to a Graphical Environment (2, 4), said method **characterized by** changing dynamically the association of HIDs (32, 34) to said graphical environment (2, 4).

2. Method according to claim 1, wherein said HIDs (32, 34) are automatically routed to said Graphical Environment (2, 4).

3. Method according to claim 1, wherein said HIDs (32, 34) are routed to said Graphical Environment (2, 4) according to predefined User preferences.

4. Method according to claim 1, wherein said HIDs (32, 34) are routed to said Graphical Environment (2, 4) by an instant selection made by the user.

5. A method according to claim 1 or 2 wherein the HIDs (32, 34) are one of a keyboards, mousses, or joysticks.

6. A system for dynamically managing allocation of BIDs (32, 34) to a Graphical Environment (2, 4), **characterized by** means for changing dynamically the association of said HIDs (32, 34) to said graphical environment (2, 4).

7. A system according to claim 6, comprising at least a Path Manager service (20) adapted for connecting a driver file descriptor of an HID to the Window System (30, 31) of the Graphical Environment (2, 4) based on values of a routing table (22).

8. A system according to claim 7 comprising at least a Peripheral Associating Application (24) adapted for displaying current association of HIDs (32, 34) and for changing said association based on user selection.

9. A system according to claim 7 wherein said HIDs (32, 34) are one of a keyboard, a mouse, or a joystick, or any Human I/F Device (HID) .

10. A communication device (1) connectable to a distant server for remotely using an application (33, 35) running under a Graphical Environment (2, 4) in said distant server, said communication device (1) comprising means for changing dynamically the association of HIDs (32, 34) to said graphical environment (2, 4).

11. A communication device according to claim 10 wherein the HIDS (32, 34) are keyboards, mousses, or joysticks or any Human Interface device.

12. Computer program stored on recording medium and comprising instructions for performing the steps of the method according to claims 1 when executed on a computer system.
